# EUROPEAN PATENT APPLICATION

(11) **EP 4 697 556 A1**
(43) Date of publication of application: **18.02.2026**
(21) Application number: 25196096.9
(22) Date of filing: 14.08.2025
(51) Int. Cl.: H02J 7/00

(54) **SYSTEM AND METHOD FOR CONTROLLING CHARGING AND DISCHARGING OF BATTERY**

(30) Priority: 14.08.2024 KR 20240109433
(71) Applicant: SAMSUNG SDI CO., LTD., Yongin-si, Gyeonggi-do 17084 (KR)
(72) Inventor: OH, Seotaek, 17084 Yongin-si (KR)
(74) Representative: Marks & Clerk LLP

(57) **Abstract**

A system for controlling charging and discharging of a battery includes a charging and discharging switch configured to perform a switching operation for the charging and discharging of a battery. An analog front end (AFE) unit is configured to detect a voltage of the battery and to be stopped after transmitting a specific signal when detecting a voltage having a certain voltage parameter value or more. A main controller unit (MCU) configured to turn off the charging and discharging switch when receiving the specific signal from the analog front end unit.

## Description

### BACKGROUND

### 1. Technical Field

The present disclosure relates to a system and method for controlling the charging and discharging of a battery. In particular, the present disclosure relates to a system and method for controlling the charging and discharging of a battery that have their operations automatically recovered when an operation of an analog front end (AFE) is stopped due to electrostatic discharge (ESD).

### 2. Related Art

Unlike primary batteries that are not designed to be recharged, secondary batteries are designed to be recharged after being discharged. Low-capacity secondary batteries are used in small portable electronic devices, such as smart phones, feature phones, notebook computers, digital cameras, and camcorders. Large-capacity secondary batteries are widely used as power sources for driving motors, such as of hybrid vehicles or electric vehicles, and for power storage. The secondary battery includes an electrode assembly comprising a positive electrode and a negative electrode, a case in which the electrode assembly is accommodated, a terminal part connected to the electrode assembly, etc.

In general, a battery pack includes at least one secondary battery, an analog front end (AFE) protection circuit that is circuited and connected to a secondary battery and that prevents an overcharge, overdischarge, or overcurrent state. The battery pack also includes a microcomputer that is also circuited and connected to the AFE protection circuit, with the microcomputer calculating the capacity of remaining battery. The battery pack further includes a case in which the secondary battery, the AFE protection circuit, and the microcomputer are received.

The information disclosed in this section is for enhancement of understanding of the background of the present disclosure. It may contain information that does not constitute related or prior art.

### SUMMARY

Embodiments of the present disclosure are directed to provide a system and method for controlling the charging and discharging of a battery, which have their operations automatically recovered even though an operation of an analog front end (AFE) is stopped due to ESD.

However, the technical problems to be solved by the present disclosure is not limited to the above-described problems. Other problems not mentioned herein, and aspects and features of the present disclosure that would address such problems, will be clearly understood by those skilled in the art from the present disclosure.

A system for controlling charging and discharging of a battery according to embodiments of the present disclosure may include a charging and discharging switch configured to perform a switching operation for the charging and discharging of a battery, an analog front end (AFE) unit configured to detect a voltage of the battery and (to be) stopped after transmitting a specific signal when detecting a voltage having a certain (or preset) voltage parameter value or more, and a main controller unit (MCU) configured to turn off the charging and discharging switch when receiving the specific signal from the AFE unit.

In embodiments, the MCU may be configured to transmit a release signal that turns on the charging and discharging switch again and a reset signal that turns on the AFE unit again, after turning off the charging and discharging switch.

In embodiments, when receiving the specific signal again, the MCU may be configured to transmit the release signal and the reset signal after a lapse of a predetermined time following (or after) turning off the charging and discharging switch.

In embodiments, the AFE unit may detect a current of the battery and is stopped after transmitting the specific signal when detecting a current having a preset current parameter value or more.

In embodiments, the specific signal may be a low signal or a high signal.

In embodiments, the certain voltage parameter value may be 8 kV in a case of contact discharge.

In embodiments, the certain voltage parameter value may be 16 kV in a case of aerial discharge.

In embodiments, the charging and discharging switch may include a charging field effect transistor (FET) and a discharging FET.

A method of controlling the charging and discharging of a battery according to embodiments of the present disclosure may include detecting a voltage of a battery using (or through) an analog front end (AFE) unit, when a voltage having a certain (or preset) voltage parameter value or more is detected, the AFE unit sends (or transmits) a specific signal and is stopped, and when a main controller receives the specific signal from the AFE unit, a main controller (MCU) turns off a charging and discharging switch that performs a switching operation for the charging and discharging of the battery.

In embodiments, the MUC may transmits a release signal that turns on the charging and discharging switch again and a reset signal that turns on the AFE unit again after turning off the charging and discharging switch.

In embodiments, when the MCU receives the specific signal again, the MCU transmits the release signal and the reset signal after a lapse of a predetermined time following (or after) turning off the charging and discharging switch.

In embodiments, the method of controlling the charging and discharging of a battery may further include detecting a current of the battery using (or through) the AFE unit and, when detecting a current having a certain (or preset)current parameter value or more, the AFE unit transmits the specific signal and is stopped.

In embodiments, the specific signal may be a low signal or a high signal.

In embodiments, the certain (or preset) voltage parameter value may be 8 kV in a case of contact discharge.

In embodiments, the certain (or preset) voltage parameter value may be 16 kV in a case of aerial discharge.

According to the embodiments of the present disclosure, the state in which a protection operation is not performed on a battery pack and the state in which the system does not operate because the AFE unit that performs voltage/current/protection operations enters the power down mode due to ESD and, thus, an operation of the AFE unit is stopped can be automatically recovered.

According to the embodiments of the present disclosure, when an external voltage event, such as ESD, occurs, although the system is shut down, a battery pack can autonomously operate again, thereby preventing damage to the AFE unit or a charging integrated chip (IC).

At least some of the above and other features of the invention are set out in the claims.

However, aspects and features of the present disclosure are not limited to those described above, and other aspects and features not mentioned will be clearly understood by a person skilled in the art from the present disclosure.

### BRIEF DESCRIPTION OF THE DRAWINGS

The drawings illustrate embodiments of the present disclosure and help to further understand the present disclosure along with the detailed description. The present disclosure is not limited to the embodiments depicted in the drawings.
FIG. 1 is a block diagram of a system for controlling the charging and discharging of a battery according to embodiments of the present disclosure.
FIG. 2 is a flowchart for a method of controlling the charging and discharging of a battery according to embodiments of the present disclosure.

### Detailed description

Embodiments of the present disclosure will be described below in detail with reference to the accompanying drawings. Prior to the description, it is noted that the terms or words used in this specification and claims should not be construed as being limited to common or dictionary meanings but instead should be understood to have meanings and concepts in agreement with the present disclosure based on the principle that an inventor can define the concept of each term suitably in order to describe his/her own invention in the best way possible. Accordingly, since the embodiments described in this specification and the configurations illustrated in the drawings are only examples of the present disclosure and they do not cover all the technical ideas of the present disclosure. And it should be understood that various changes and modifications may be made at the time of filing this application.

It will be further understood that the terms "comprises/includes" and/or "comprising/including" when used herein, specify the presence of stated features, integers, steps, operations, elements, components, and/or groups thereof, but do not preclude the presence or addition of one or more other features, integers, steps, operations, elements, components, and/or groups thereof.

In order to facilitate understanding of the present disclosure, the accompanying drawings are not drawn to scale and the dimensions of some components may be exaggerated. It should be noted that the same reference numerals are designated to the same components in different embodiments.

Reference to two compared elements, features, etc. as being "the same" means that they are "substantially the same". Therefore, the phrase "substantially the same" may include a deviation that is considered low in the art, for example, a deviation of 5% or less. The uniformity of any parameter in a given region may mean that it is uniform from an average perspective.

Although the terms such as "first" and/or "second" are used to describe various components, these components are not limited by these terms, of course. These terms are only used to distinguish one component from another component. Thus, unless specifically stated to the contrary, a first component may be termed a second component without departing from the teachings of embodiments.

Throughout the specification, unless otherwise stated, each element may be singular or plural.

Arrangement of any component "above (or below)" or "on (or under)" a component may mean that any component is disposed in contact with the upper (or lower) surface of the component, as well as that other components may be interposed between the element and any element disposed on (or under) the element.

It will be understood that, when a component is referred to as being "connected", "coupled", or "joined" to another component, not only can it be directly "connected", "coupled", or "joined" to the other element, but also can it be indirectly "connected", "coupled", or "joined" to the other element with other elements interposed therebetween.

As used herein, the term "and/or" includes any and all combinations of one or more of the associate listed items. The use of "may" when describing embodiments of the present disclosure relates to "one or more embodiments of the present disclosure". Expressions such as "at least one" and "one or more" preceding a list of elements modify the entire list of elements and do not modify the individual elements in the list.

Throughout the specification, when "A and/or B" is stated, it means A, B, or A and B, unless otherwise stated. In addition, when "C to D" is stated, it means C or more and D or less, unless specifically stated to the contrary.

When the phrase such as "at least one of A, B, and C", "at least one of A, B, or C", "at least one selected from the group of A, B, and C", or "at least one selected from among A, B, and C" is used to designate a list of elements A, B, and C, the phrase may refer to any and all suitable combinations.

The term "use" may be considered synonymous with the term "utilize". As used herein, the terms "substantially," "about," and similar terms are used as terms of approximation rather than as terms of degree, and are intended to account for inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Accordingly, a first element, component, region, layer, or section discussed below may be termed a second element, component, region, layer, or section without departing from the teachings of the embodiments.

For ease of explanation in describing the relationship of one element or feature to another element(s) or feature(s) as illustrated in the drawings, spatially relative terms such as "beneath", "below", "lower", "above", and "upper" may be used herein. It will be understood that spatially relative positions are intended to encompass different directions of the device in use or operation in addition to the direction depicted in the drawings. For example, if the device in the drawings is turned over, any element described as being "below" or "beneath" another element would then be oriented "above" or "over" another element. Therefore, the term "below" may encompass both upward and downward directions.

The terminology used herein is for the purpose of describing embodiments of the present disclosure and is not intended to limit the present disclosure.

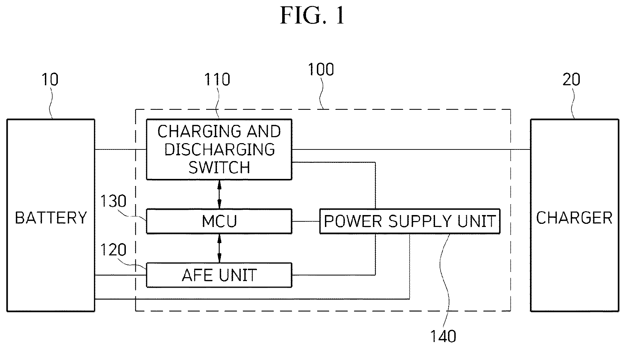

FIG. 1 is a block diagram of a system for controlling the charging and discharging of a battery according to embodiments of the present disclosure.

Referring to FIG. 1, a system 100 for controlling the charging and discharging of a battery according to embodiments of the present disclosure may include a charging and discharging switch 110, an analog front end (AFE) unit 120, a main controller unit (MCU) 130, and a power supply unit 140.

The system 100 for controlling the charging and discharging of a battery may be connected to a battery 10, and may manage the voltage or current of the battery 10 and manage the charging or discharging the battery 10. In embodiments, the system 100 for controlling the charging and discharging of a battery may be a battery management system (BMS) of the battery 10.

The battery 10 may be a battery cell capable of being charged and discharged. The battery cell may be sealed in a battery case and include an electrode assembly having a positive electrode/isolator/negative electrode structure that has been impregnated into a lithium electrolyte. Such an electrode assembly may be a jelly-roll structure (a winding type) in which a positive electrode and a negative electrode each having active materials applied on both sides thereof. Each of the positive and negative electrodes may be a long sheet type that are wound in the state in which an isolator is interposed between the positive electrode and the negative electrode. In other embodiments, the electrode assembly may be a stack type structure in which multiple positive electrodes and negative electrodes, which each have a predetermined size and active materials applied on both sides thereof, are sequentially stacked with an isolator interposed between the positive electrodes and the negative electrodes.

In cylindrical type and prismatic type cells, an electrode assembly is accommodated in the battery case that is a metal can. In a pouch type battery cell an electrode assembly is accommodated in a battery case formed of an aluminum laminate sheet. The battery 10 may have a structure in which two or more battery cells are connected in series and/or in parallel.

The system 100 for controlling the charging and discharging of a battery may be connected to a charger 20. The system 100 may play a role to control external power that is supplied to the battery 10 through the charger 20.

The charging and discharging switch 110 may perform a switching operation for the charging and discharging the battery. The charging and discharging switch 110 may include a charging field effect transistor (FET) and a discharging FET. The charging FET may be configured so that the charging FET has a first stage connected to a B+ terminal of the battery 10 and a second stage connected to the discharging FET. The discharging FET may be configured so that the discharging FET has a first stage connected to a P+ terminal of the charger 20 and a second stage connected to the second stage of the charging FET. That is, the charging FET and the discharging FET may be configured so that the charging FET and the discharging FET have their second stages mutually connected and have their body diodes formed in opposite directions. In this case, the body diode may be a parasitic diode or an internal diode that is formed by a PN junction between the source and drain terminals of each of the charging FET and the discharging FET. A current by the parasitic diode may be formed even when a voltage is not applied to the gate terminal of each of the charging FET and the discharging FET. The charging FET and the discharging FET may have the body diodes formed in the opposite directions, and, thus, a flow of the current of each of the charging FET and the discharging FET through the charging path may be limited.

The AFE unit 120 may detect the voltage of the battery 10, and the AFE unit 120 may be stopped after transmitting a specific signal when detecting a voltage having a preset voltage parameter value or more. In embodiments, the AFE unit 120 may be configured to monitor the voltage, current, temperature, and charging rate of the battery 10. Electrostatic discharge (ESD) has occurred when a voltage having a certain voltage parameter value or more has occurred. In embodiments, the certain voltage parameter value may be 8 kV in the case of contact discharge and may be 16 kV in the case of aerial discharge. For example, when a detected voltage value of the battery 10 is 8 kV or more due to contact discharge, the AFE unit 120 may transmit a specific signal to the MCU 130 to stop operation of the battery 10. The specific signal may be a low signal or a high signal. For example, if the signal that is transmitted from the AFE unit 120 to the MCU 130 is a high signal during a normal state and a voltage having a preset parameter value or more is detected due to ESD, a low signal may be transmitted from the AFE unit 120 to the MCU 130.

The AFE unit 120 may detect the current of the battery 10 and may be stopped after transmitting the specific signal when detecting a current having a certain current parameter value or more. And the AFE unit 120 may detect a short-circuit of the battery 10. In the case of the short-circuit, an excessive current may be generated. Accordingly, when a current having a certain current parameter value or more due to the generation of the short-circuit is detected, the AFE unit 120 may be stopped after transmitting the specific signal.

When receiving the specific signal from the AFE unit 120, the MCU 130 may turn off the charging and discharging switch 110. A circuit that controls the charging and discharging switch 110 may be embedded in the AFE unit 120. However, when an operation of the AFE unit 120 is stopped due to ESD or a short-circuit (as described above), the AFE unit 120 may not perform a normal voltage/current/protection operation. Accordingly, when the AFE unit 120 transmits the specific signal because an operation of the AFE unit 120 is stopped, the MCU 130 may receive the specific signal and turn off the charging and discharging switch 110.

After turning off the charging and discharging switch 110, the MCU 130 may transmit a release signal that turns on the charging and discharging switch 110 again and a reset signal that turns on the AFE unit 120 again. When the operation of the AFE unit 120 is stopped, the MCU 130 may transmit signals that turn on the charging and discharging switch 110 and the AFE unit 120 again because the AFE unit 120 is not performing a normal voltage/current/protection operation. A conventional BMS does not have a function for recovering an operation of the AFE unit through hardware or software when the AFE unit is stopped. But in the battery charging and discharging management system 100 according to embodiments of the present disclosure, the AFE unit 120 may return a normal operation as a result of software run by the MCU 130.

Thereafter, when receiving the specific signal again, the MCU 130 may transmit the release signal and the reset signal after a lapse of a predetermined time following the turning off the charging and discharging switch 110. When receiving the specific signal from the AFE unit 120, the MCU 130 may turn off the charging and discharging switch 110 and then transmit the release signal and the reset signal. When ESD or a short-circuit repeatedly occurs in a short period and the MCU 130 stops the AFE unit 120 and turns off the charging and discharging switch 110 whenever the ESD or short-circuit occurs, the AFE unit 120 may not operate normally and may go dead. In severe cases, the AFE unit 120 or a charging integrated chip (IC) may be damaged. Accordingly, when receiving the specific signal again, the MCU 130 may only transmit the release signal and the reset signal after a lapse of a predetermined time, that is, not immediately transmit the release signal and the reset signal. The predetermined time may be, for example, 30 seconds.

The power supply unit 140 may be configured to provide operating voltages of the AFE unit 120 and the MCU 130 by using power stored in the battery 10.

The state in which a protection operation is not performed on a battery pack and the state in which the system does not operate because the AFE unit 120 that performs voltage/current/protection operations enters a power down mode due to ESD and an operation thereof is stopped can be automatically recovered. Further, although the system is shut down when an external voltage event, such as ESD, occurs, a battery pack can operate again autonomously, thereby preventing damage to the AFE unit 120 or the charging IC.

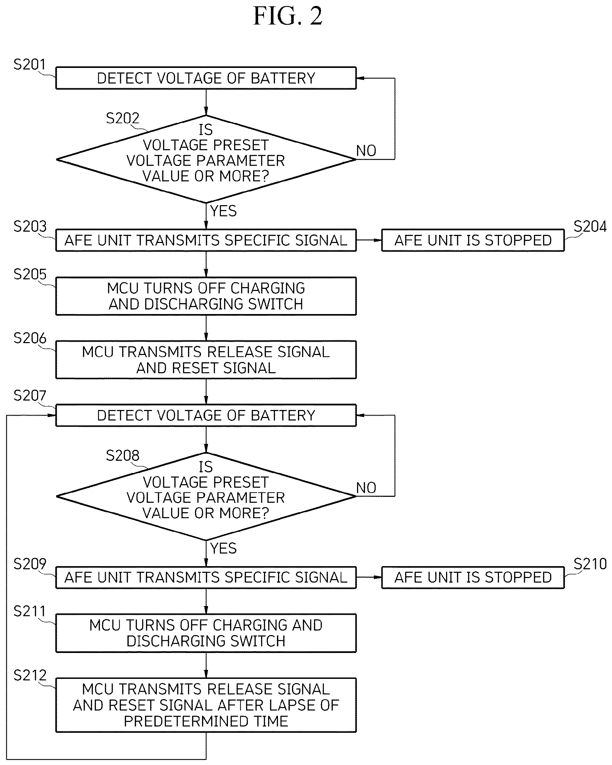

FIG. 2 is a flowchart of a method of controlling the charging and discharging of a battery according to embodiments of the present disclosure.

As illustrated in FIG. 2, the method of controlling the charging and discharging of a battery according to embodiments of the present disclosure may include steps S201 to S212.

At the start of the method, the AFE unit may detect the voltage of the battery (S201). When a voltage having a certain voltage parameter value or more is detected (S202), the AFE unit may transmit the specific signal (S203) and may be stopped (S204).

When the MCU receives the specific signal from the AFE unit, the MCU may turn off the charging and discharging switch that performs a switching operation for the charging and discharging of the battery (S205). After turning off the charging and discharging switch, the MCU may transmit the release signal that turns on the charging and discharging switch again and the reset signal that turns on the AFE unit again (S206).

After operations of the AFE unit and the charging and discharging switch are recovered, the AFE unit again detects the voltage of the battery (S207).

Then, when a voltage having a certain voltage parameter value or more (S208) is detected, the AFE unit may transmit the specific signal (S209) and may be stopped (S210).

When receiving the specific signal from the AFE unit, the MCU may turn off the charging and discharging switch that performs a switching operation for the charging and discharging of the battery (S211). When receiving the specific signal, the MCU may transmit the release signal and the reset signal after a predetermined time has elapsed since the turning off the charging and discharging switch (S212).

The method of controlling the charging and discharging of a battery according to the embodiments of the present disclosure has been described with reference to the flowchart if FIG. 2. For a simplicity, the method has been illustrated and described as a series of blocks, but the present disclosure is not limited to the sequence of the blocks, and some blocks may be performed in a sequence different from or simultaneously with that of other blocks. Various other branches, flow paths, and sequences of blocks that achieve the same or similar results may be implemented. Furthermore, not all the blocks illustrated in order to implement the method described in this specification may be required.

In the description given with reference to FIG. 2, each of the steps may be further divided into additional steps or the steps may be combined into smaller steps depending on an implementation example of the present disclosure. Furthermore, some of the steps may be omitted, if necessary, and the sequence of the steps may be changed. Furthermore, the contents of FIG. 1 may be applied to the contents of FIG. 2. Furthermore, the contents of FIG. 2 may be applied to the contents of FIG. 1.

Although the present disclosure has been described above in connection with embodiments and drawings, the present disclosure is not limited to the expressly described embodiments. A person having ordinary knowledge in the art to which the present disclosure pertains may modify and change the present disclosure provided such modifications or changes fall within the scope of the following claims.

### <DESCRIPTION OF REFERENCE NUMERALS>

| | | | |
|---|---|---|---|
| 10: | battery | 20: | charger |
| 100: | system for controlling of battery charging and discharging | | |
| 110: | charging and discharging switch | | |
| 120: | AFE unit | 130: | MCU |
| 140: | power supply unit | | |

## Claims

1. A system for controlling charging and discharging of a battery, the system comprising:
a charging and discharging switch configured to perform a switching operation for charging and discharging of a battery;
an analog front end unit configured to detect a voltage of the battery and to be stopped after transmitting a specific signal when detecting a voltage having a certain voltage parameter value or more; and
a main controller unit configured to turn off the charging and discharging switch when receiving the specific signal from the analog front end unit.

2. The system as claimed in claim 1, wherein the main controller unit is further configured to transmit a release signal that turns on the charging and discharging switch again and a reset signal that turns on the analog front end unit again after turning off the charging and discharging switch.

3. The system as claimed in claim 2, wherein, when receiving the specific signal again, the main controller unit is configured to transmit the release signal and the reset signal after a lapse of a predetermined time following turning off the charging and discharging switch.

4. The system as claimed in any preceding claim, wherein the analog front end unit detects a current of the battery and is stopped after transmitting the specific signal when detecting a current having a preset current parameter value or more.

5. The system as claimed in any preceding claim, wherein the specific signal is a low signal or a high signal.

6. The system as claimed in any preceding claim, wherein the certain voltage parameter value is 8 kV in a case of contact discharge.

7. The system as claimed in any preceding claim, wherein the certain voltage parameter value is 16 kV in a case of aerial discharge.

8. The system as claimed in any preceding claim, wherein the charging and discharging switch comprises a charging field effect transistor and a discharging field effect transistor.

9. A method of controlling charging and discharging of a battery, the method comprising:
detecting a voltage of a battery using an analog front end unit,
wherein, when a voltage having a certain voltage parameter value or more is detected, the analog front end unit sends a specific signal and is stopped, and
wherein, when a main controller unit receives the specific signal from the analog front end unit, the main controller unit turning offs a charging and discharging switch that performs a switching operation for charging and discharging of the battery.

10. The method as claimed in claim 9, wherein the main controller unit transmits a release signal that turns on the charging and discharging switch again and a reset signal that turns on the analog front end unit again after turning off the charging and discharging switch.

11. The method as claimed in claim 10, wherein, when the main controller receives the specific signal again, the main controller unit transmits the release signal and the reset signal after a lapse of a predetermined time following turning off the charging and discharging switch

12. The method as claimed in any of claims 9 to 11, further comprising detecting a current of the battery using the analog front end unit,
wherein, when a current having a current parameter value or more is detected, the analog front end unit transmits the specific signal and is stopped.

13. The method as claimed in any of claims 9 to 12, wherein the specific signal is a low signal or a high signal.

14. The method as claimed in any of claims 9 to 13, wherein the certain voltage parameter value is 8 kV in a case of contact discharge.

15. The method as claimed in any of claims 9 to 14, wherein the certain voltage parameter value is 16 kV in a case of aerial discharge.
